# EUROPEAN PATENT APPLICATION

(11) **EP 4 530 956 A1**
(43) Date of publication of application: **02.04.2025**
(21) Application number: 24202587.2
(22) Date of filing: 25.09.2024
(51) Int. Cl.: G06Q 20/18, G06Q 20/20, G07G 1/00, G07G 1/12, G07G 1/14

(54) **PREDICTING NON-BARCODED ITEMS DURING CHECKOUTS**

(30) Priority: 29.09.2023 US 202318375336
(71) Applicant: NCR Voyix Corporation, Atlanta, GA 30308-1007 (US)
(72) Inventor: BENNETT, Ian James Frederick, Stratford (CA)
(74) Representative: Secerna LLP

(57) **Abstract**

Transaction data and loyalty data are evaluated to predict item codes for non-barcoded items that a given customer is most-likely to purchase in a current and in-progress transaction and/or in a future transaction. Predicted item codes are maintained with a customer identifier for each customer. During a transaction when the customer indicates through a transaction interface that the customer needs to lookup or find an item code for a non-barcoded item, the predicted item codes, which are specific to the customer, are used to suggest an item code for the non-barcoded item during the transaction as an enhanced feature of a transaction interface and in addition to item code browsing features and item code searching/lookup features of the transaction interface.

## Description

### Background

Self-checkouts have been growing in popularity since the COVID pandemic and have continued in popularity post pandemic. Generally, the self-checkout experience is popular with consumer. However, when a consumer attempts to purchase a non-barcoded item, such as loose vegetables, the experience degrades. The consumer must access a search menu through the transaction interface to locate the proper code for their item. Many item images appear to be similar such as organic produce versus non-organic produce. As a result, the experience can become frustrating for the consumer and take much longer than the consumer anticipated to checkout.

### Summary

In various embodiments, a system, and methods for predicting non-barcoded items during checkouts are presented. In an embodiment, transaction data and loyalty data are evaluated to predict item codes for non-barcoded items that a given customer is most-likely to purchase in a current and in-progress transaction and/or in a future transaction. Predicted item codes are maintained with a customer identifier for each customer. The predicted item codes are used to suggest an item code for a non-barcoded item during a transaction of a customer as a feature of a transaction interface and in addition to item code browsing features and item code searching/lookup features of the transaction interface.

According to a first aspect of the present invention there is provided a method, comprising:
maintaining a list of predicted item codes for non-barcoded items based on a transaction history of a customer;
providing a predicted item code obtained from the list during a current transaction of the customer at a terminal responsive to an indication that the customer is operating a transaction interface of the terminal to locate a potential item code for a current non-barcoded item; and
causing the transaction interface to present the predicted item code to the customer as a selectable item code for the current non-barcoded item before the customer performs an item code search within the transaction interface for the potential item code.

Aptly, the method further comprises:
receiving an actual item code selected by the customer for the current non-barcoded item as feedback; and
using the actual item code to improve accuracy metrics associated with the predicted item codes of the list.

Aptly, the method further comprises:
periodically updating the list of predicted item codes at a configured interval of time based on an updated transaction history for the customer.

Aptly, the method further comprises:
sorting the list based on an updated probability assigned to each of the predicted item codes after the current transaction concludes.

Aptly, maintaining further includes linking the list to a loyalty account of the customer.

Aptly, maintaining further includes sorting the list based on probabilities assigned to each of the predicted item codes.

Aptly, maintaining further includes maintaining the list as a table, each row of the table identifies a certain predicted item code, and each column of the table identifies one or more of metric types, pattern types, and image feature types for a model image of a corresponding item.

Aptly, providing further includes providing a configurable number of additional predicted item codes from the list with the predicted item code.

Aptly, causing further includes causing the transaction interface to present the additional predicted item codes as additional selected item codes for the current non-barcoded item.

Aptly, causing further includes causing the transaction interface to present images and item descriptions for the predicted item code and the additional predicted item codes along with the selectable item code and additional selectable item codes.

According to a second aspect of the present invention there is provided a method, comprising:
generating a data structure that identifies predicted item codes for non-barcoded items purchased by customer;
integrating access to the data structure into a loyalty account of a loyalty system of the customer; and
providing access to the data structure through the loyalty account to enhance a transaction interface of a terminal during a current transaction of the customer by presenting at least one of the predicted item codes as a selectable option to the customer for a current non-barcoded item in addition to an item code searching option provided by the transaction interface.

Aptly, the method further comprises:
updating the data structure at predetermined times to account for completed transactions of the customer where any of the non-barcoded items were purchased.

Aptly, generating further includes calculating and deriving metrics and patterns within the data structure for each predicted item code based on a transaction history of the customer.

Aptly, generating further includes adding image features for a model image of each item associated with a corresponding predicted item code into the data structure.

Aptly, generating further includes maintaining a current list of a configured number of the predicted item codes with the data structure.

Aptly, integrating further includes updating the current list into a field or fields associated with the loyalty account.

Aptly, integrating further includes updating a link within a field of the loyalty account to the data structure.

Aptly, integrating further includes providing an application programming interface call to retrieve the data structure using a loyalty identifier for the loyalty account.

According to a third aspect of the present invention there is provided a system, comprising:
at least one server comprising at least one processor and a non-transitory computer-readable storage medium;
the non-transitory computer-readable storage medium comprising executable instructions; and
the executable instructions when executed by at least one processor cause the at least one processor to perform operations, comprising:
   maintaining a data structure comprising predicted item codes for non-barcoded item codes purchased by a customer based on a transaction history of the customer;
   updating the data structure based on subsequent transactions of the customer;
   providing access to at least a preconfigured number of the predicted item codes of the data structure using a loyalty identifier of the customer;
   providing the at least preconfigured number of the predicted item codes to a transaction interface of a terminal based on receiving the loyalty identifier during a current transaction of the customer when the customer selects an item code lookup option for a current non-barcoded item; and
   causing the transaction interface to present the at least preconfigured number of the predicted item codes as at least one selectable item code option for the current non-barcoded item without the customer conducting an item code search first through the item code lookup option.

Aptly, the terminal is a self-service terminal operated by a customer during the transaction or the terminal is a point-of-sale terminal operated by a cashier for the customer during the transaction.

### Brief Description of the Drawings

FIG. 1 is a diagram of a system for predicting non-barcoded items during checkouts, according to an example embodiment.
FIG. 2 is a flow diagram of a method for predicting non-barcoded items during checkouts, according to an example embodiment.
FIG. 3 is a flow diagram of another method for predicting non-barcoded items during checkouts, according to an example embodiment.

### Detailed Description

Customers or shoppers are not trained cashiers, they do not remember price-lookup (PLU) codes for item. Consequently, when a non-barcoded item is purchased at a self-checkout, the customer must access the transaction interface and search or browse an extensive list to identify their item. This adds friction (e.g., time and steps) to the checkout process, delays the customer, causes backups in the checkout queue, delays transaction throughput, and lowers the customer's overall satisfaction with the self-checkout process as a whole. Furthermore, if a customer is unsure which PLU code to supply for a non-barcoded item during a self-checkout, the customer can supply an incorrect PLU code, which can cause inventory problems and miss charging issues for a store.

The aforementioned issues are mitigated with the teachings herein and below. In an embodiment, transaction histories for customers are evaluated to identify previously purchased non-barcoded items by customer as well as a frequency of each non-barcode item purchased by customer. When a customer purchases a non-barcoded item at a self-checkout, the transaction interface, which is associated with searching or browsing a list of PLU or item codes, is enhanced to provide the customer a sorted list of previously purchased non-barcoded items of the customer. The first non-barcoded item suggested in the sorted list is predicted to be the current non-barcoded item being purchased by the customer. This reduces friction for non-barcoded item purchases at the self-checkout, improves store item inventory management, and reduces miss charging issues for miss identifying the current non-barcoded item being purchased by the customer.

As used herein, "a top number of item codes or predicted item codes" is a configurable number of item codes set by a retailer or optionally, by a customer through an interface to loyalty system. This refers to item codes with up-to-date and current highest probabilities to appear as non-barcoded items in a customer's next and future purchase transaction with a store of the retailer.

A "non-barcoded item" is an item offered for sale by a store of a retailer which lacks an PLU code or barcode. Such items include, by way of example only, loose fruits, vegetables, nuts, bolts, screws, washers, pieces of candy, etc.

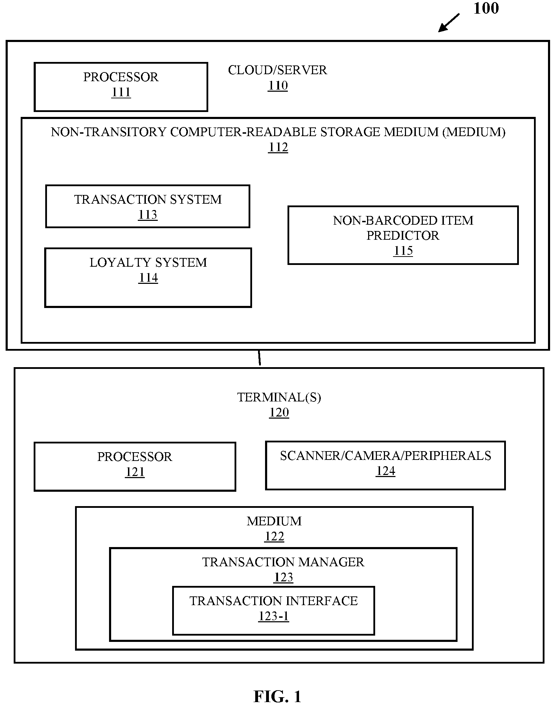

FIG. 1 is a diagram of a system 100 for predicting non-barcoded items during checkouts, according to an example embodiment. Notably, the components are shown schematically in greatly simplified form, with only those components relevant to understanding of the embodiments illustrated.

Furthermore, the various components illustrated in FIG. 1 and their arrangement are presented for purposes of illustration only. Notably, other arrangements with more or less components are foreseeable without departing from the teachings of predicting non-barcoded items during checkouts as presented herein and below.

The system 100 includes a cloud 110 or a server 110 (herein after just "cloud 110") and a plurality of terminals 120. Cloud 110 includes a processor 111 and a non-transitory computer-readable storage medium (herein after just "medium") 112, which includes executable instructions for a transaction system 113, a loyalty system 114, a non-barcoded item predictor 115 The instructions when executed by processor 111 perform operations discussed herein and below with respect to 113, 114, and 115. Medium 112 also includes transaction history data and loyalty data.

Each terminal 120 includes a processor 121 and medium 112, which includes executable instructions for a transaction manager 123, which includes instructions for a corresponding transaction interface 123-1. Each terminal 120 further includes a scanner/camera/peripherals 124 to capture at least one image of an item during a transaction at the corresponding terminal 120. The instructions when executed by processor 121 perform operations discussed herein and below with respect to 123 and 124.

Initially, non-barcoded item predictor 115 processes transaction history data generated by transaction system 113 and loyalty data maintained by loyalty system 114. Non-barcoded item predictor 115 identifies each customer using a unique loyalty account or identifier within the loyalty data, and non-barcoded item predictor 115 identifies historical transactions for the corresponding customer from the transaction data using the corresponding loyalty account.

Next, non-barcoded item predictor 115 generates a set of historical non-barcoded item transaction records for each customer from the corresponding customer's historical transactions. Each record includes, items processed in the historical transactions for which an item code (e.g., PLU code) was manually entered or provided during the transaction as an indication of a previously purchased non-barcoded item. The non-barcoded item predictor 115 maintains, within each customers non-barcoded item transaction record, the item code entered for the non-barcoded item, a transaction identifier for the transaction, the transaction date for the transaction, a transaction time of day for the transaction, a quantity of the non-barcoded items purchased in the transaction, any promotion that was redeemed by the customer for the item, and, optionally a listing of other item codes purchased in the transaction with a given non-barcoded item (e.g., a basket of items associated with a context in which a non-barcoded item is purchased by the corresponding customer).

The non-barcoded item predictor 115 analyzes each customer's set of historical non-barcoded item transaction records to obtain a variety of metrics and/or patterns. For example, customer X purchases an apple twice a week on Mondays and Wednesdays; customer Y usually purchases a kiwi when the transaction includes a salad mix; customer Z has purchased two oranges in 10 transactions out of 11 total transactions for the most-recent month, customer X has only ever purchased apples when making non-barcoded item purchases, customer Y typically purchases a tomato when a promotion is available for tomatoes, etc.

In an embodiment, the metadata is a table data structure, each row of the table associated with a particular item code for a non-barcoded item purchase of the customer and columns of the table represent types of metrics and/or types of patterns associated with the corresponding item code. Each cell of the table identifies a given item code and a given metric or a given pattern.

In an embodiment, the columns of the table further include types of image features associated with image features derived from module images of each corresponding item code. For example, a table cell for an orange item code row and an image shape column includes a circular shape value and a table cell for the orange item code row and a color histogram column includes a range of orange pixel color values.

The non-barcoded item predictor 115 associates or links each customer's non-barcoded item analysis table with the customer's loyalty account of identifier. In this way, a given customer's table is available for analysis during a transaction of the corresponding customer once the customer provides or is identified to their loyalty identifier, which is typically at the start of a transaction.

In an embodiment, non-barcoded item predictor 115 sorts the rows of each customer table based on most likely next non-barcoded items, which the customer is predicted to purchase in a next customer transaction. For example, if a current day of the week is a Monday or a Wednesday, customer X's table is sorted with an apple item code being the first row of the table. The non-barcoded item predictor 115 also dynamically sorts the table during a transaction. For example, customer Y is engaged in a current transaction at terminal 120 and has just scanned a salad mix, causing non-barcoded item predictor 115 to dynamically sort customer Y's table during the transaction with a kiwi item code being the first row of the table.

In an embodiment, non-barcoded item predictor 115 updates a given customer's table in real time based on current customer transactions. In an embodiment, non-barcoded item predictor 115 updates each customer's table at predetermined times, such as once a week, twice a week, once a month, etc. Transaction managers 123 update transaction data of customers to the corresponding transaction system 113 when customers perform transaction at terminals 120 and the real-time or periodic transaction data is obtained by non-barcoded item predictor 115. The non-barcoded item predictor 115 generates updated non-barcoded item purchase records, updates the metrics and patterns, and updates the corresponding tables.

In an embodiment, when a customer is engaged in a transaction, the corresponding transaction manager 123 provides the customer's loyalty identifier to the corresponding loyalty system 114 and the loyalty system 114 returns the corresponding customer's non-barcoded item purchase table to the transaction manager 123. The table is sorted based on the most likely item codes for non-barcoded items that the customer is believed to purchase during the transaction. When the customer selects an option within the transaction interface 123-1 to identify or lookup a non-barcoded item, the transaction manager 123 uses the customer's sorted table with item codes to display a first set or number of the top item codes along with images of the corresponding item codes and descriptions, which transaction manager 123 obtains from transaction system 113 using the item codes. Next to each image is an option to select this item code for the current transaction.

In an embodiment, transaction manager 123 notifies non-barcoded item predictor 115 with a customer's loyalty identifier at a start of a transaction on terminal 120. Non-barcoded item predictor 115 uses the loyalty identifier to obtain the customer's table from loyalty system 114. As items of the transaction are scanned, the transaction manager 123 sends the item codes to non-barcoded item predictor 115. The non-barcoded item predictor 115 dynamically adjusts the top predicted item codes of the table based on the context of item codes scanned for the transaction (e.g., current basket of items). When the transaction manager 123 reports to non-barcoded item predictor 115 that the customer requested to lookup or find a non-barcoded item through transaction interface 123-1, non-barcoded item predictor 115 returns a top number of mostly likely item codes from the table to transaction manager 123. Transaction manager 123 presents images and descriptions of the top number or item codes along with individual touch options to select the corresponding items for the transaction.

In an embodiment, transaction manager 123 reports a transaction being initiated by a customer to transaction system 113. The loyalty identifier for the customer is obtained by transaction system 113 from loyalty system 114 and transaction system 113 obtains the corresponding customer's table from loyalty system 114. Transaction system 113 provides a top number of item codes back to transaction manager 123. During the transaction, if the customer selects a transaction interface option to lookup an item code, the item codes are used by transaction manager 123 to present images of the items and descriptions along with options to select the items for the current transaction through the transaction interface 123-1 to the customer.

In an embodiment, transaction system 113 notifies non-barcoded item predictor 115 of a customer transaction along with the customer loyalty identifier. Transaction system 113 also reports scanned item codes being received from transaction manager 123 to non-barcoded item predictor 115. The non-barcoded item predictor 115 obtains the customer's table from loyalty system 114 using the loyalty identifier, dynamically sorts the table based on the scanned item codes and provides top predicted item codes after each scanned item to transaction system 113. When transaction manager 123 reports the customer initiated a transaction interface option to lookup an item code for the transaction to transaction system 113, the transaction system 113 provides the current top item codes or the most-recent item codes received from non-barcoded item predictor 115 to transaction manager 123. Transaction manager 123 uses the current top item codes to display images of the items, descriptions of the items, and options to select the items for the current transaction to the customer through transaction interface 123-1.

In an embodiment, the transaction system 113 and loyalty system 113 are separately executed on servers associated with retailers. The non-barcoded item predictor 115 is executed on cloud 110 and interacts with the individual retailer servers through an application programming interface (API) to initially establish each customer's item code predictions within a corresponding table maintained on the retailer server's loyalty system 114, to keep each table up to date within the loyalty system 114, and/or to provide a top number of predicted item codes to the transaction system 113 during any given transaction.

In an embodiment, transaction manager 123 provides non-barcoded item predictor 115 an image captured by camera 124 for an item being looked up by a customer along with the customer's loyalty identifier. The non-barcoded item predictor 115 extracts image features from the image and uses the customer's table to identify the most likely item. The non-barcoded item predictor 115 returns the predicted item code back to transaction manager 123. Transaction manager 123 presents an interface screen through interface 123-1 to the customer asking if this is the item the customer wants to look up the item code for along with an option for the customer to select the item for the current transaction.

In an embodiment, non-barcoded item predictor 115 uses the set of non-barcoded purchase records along with customer loyalty identifiers and/or images of non-barcoded items mapped to item codes as features to train a machine-learning model (hereinafter just "model"). The model returns to non-barcoded item predictor 115 a sorted list of predicted item codes for a given customer. The non-barcoded item predictor 115 provides a top number of the predicted item codes to transaction system 113 and/or transaction manager 123 for a given transaction. In this embodiment, the table per customer is unnecessary, since the metrics, patterns, and image features are used by the model to predict the item codes for a given customer during a transaction. In an embodiment, the predicted item codes are linked to a customer's loyalty account within a corresponding loyalty system 114. The loyalty system 114 provides the current predicted item codes linked to a customer to transaction manager 123 at a start of a customer transaction. In an embodiment, a feedback loop is created for training the model based on predicted item codes presented for selection to the customer and actual item codes entered or selected by the customer for customer transactions to continuously improve prediction accuracy metrics for the model on a per-customer basis.

In an embodiment, non-barcoded item predictor 115 maintains a current and up-to-date top number of predicted item codes for a given customer and keeps a field or set of fields of the customer's loyalty account updated with the current and up-to-date top number of predicted item codes. The loyalty system 114 provides the current predicted item codes linked to a customer to transaction manager 123 at a start of a customer transaction.

In an embodiment, non-barcoded item predictor 115 obtains current items being offered for promotion for a given store from transaction system 113, loyalty system 114, or a promotion system of a retailer. The non-barcoded item predictor 115 obtains the promotion item codes in real time during a transaction or at predetermined times, such as once a day. The non-barcoded item predictor 115 uses any promoted item code associated with a non-barcoded item to evaluate a given customer's table and to provide a top number of item codes predicted to be purchased as non-barcoded items by the customer during an in-progress and current customer transaction or before a customer's next and future transaction.

In an embodiment, terminal 120 is a self-service terminal (SST) operated by a customer for a self-service transaction. In an embodiment, terminal 120 is a point-of-sale (POS) terminal operated by a cashier on behalf of a customer during a customer-assisted transaction.

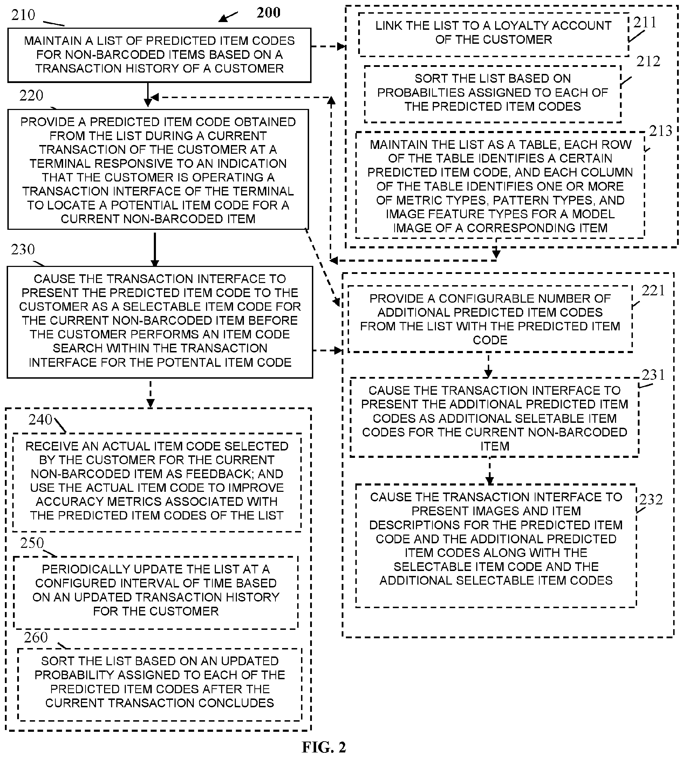

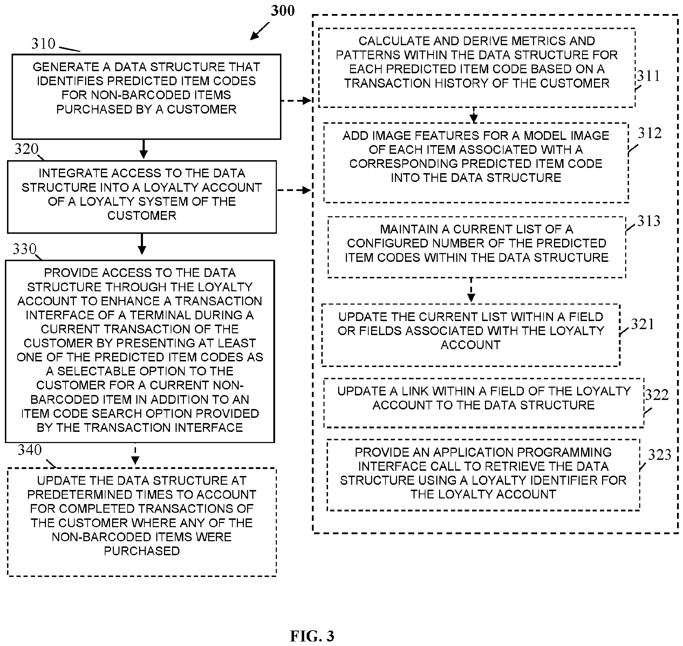

The above-referenced embodiments and other embodiments are now discussed with reference to FIGS. 2 and 3. FIG. 2 is a flow diagram of a method 200 for predicting non-barcoded items during checkouts, according to an example embodiment. The software module(s) that implements the method 200 is referred to as an "item code predictor." The item code predictor is implemented as executable instructions programmed and residing within memory and/or a non-transitory computer-readable (processor-readable) storage medium and executed by one or more processors of one or more devices. The processor(s) of the device(s) that executes the item code predictor are specifically configured and programmed to process the item code predictor. The item code predictor has access to one or more network connections during its processing. The connections can be wired, wireless, or a combination of wired and wireless.

In an embodiment, the device that executes the item code predictor is cloud 110 or server 110. In an embodiment, server 110 is a server of a given retailer that manages multiple stores, each store having a plurality of terminals 120. In an embodiment, multiple devices execute the item code predictor including cloud 110 and terminals 120. In an embodiment, terminal 120 is a self-service terminal or a point-of-sale terminal. In an embodiment, the item code predictor is some, all, or any combination of, transaction system 113, loyalty system 114, non-barcoded item predictor 115, transaction manager 123, and/or transaction interface 123-1.

At 210, the item code predictor maintains a list of predicted item codes for non-barcoded items based on a transaction history of a customer. In an embodiment, at 211, the item code predictor links the list to a loyalty account of the customer; for example, a field within a record associated with the loyalty account of a loyalty system 114 is updated to include a link to obtain the list.

In an embodiment, at 212, the item code predictor sorts the list based on probabilities assigned to each of the predicted item codes. Each predicted item code is assigned a calculated probability based on current metrics and patterns in the transaction history for which the customer purchased a non-barcoded item that corresponds to a given predicted item code.

In an embodiment, at 213, the item code predictor maintains the list as a table data structure. Each row of the table identifies certain predicted item codes, and each column of the table identifies one or more of metric types, pattern types, and image feature types for a model image of a corresponding item.

At 220, the item code predictor provides a predicted item code obtained from the list during a current transaction of the customer at a terminal 120. This predicted item code is provided responsive to an indication from a transaction manager 123 and/or a transaction system 113 that the customer is operating a transaction interface 123-1 of the terminal 120 to locate a potential item code for a current non-barcoded item. For example, the customer activated an item lookup option within the transaction interface 123-1 which causes transaction manager 123 and/or transaction system 113 to provide a loyalty identifier for the customer and the indication of the item lookup to item code predictor; item code predictor provides the predicted item code responsive to that communication with the transaction manager 123 and/or transaction system 113.

In an embodiment, at 221, the item code predictor provides a configurable number of additional predicted item codes from the list with the predicted item code. For example, the predicted item code may have the highest probability of all the predicted item codes in the list and the additional item codes have a lower probability than the predicted item code but higher probabilities than remaining predicted item codes in the list.

At 230, the item code predictor causes the transaction interface 123-1 to present the predicted item code to the customer as a selectable item code for the current non-barcoded item. This is done before the customer performs an item code search within the transaction interface 123-1 for the potential item code. For example, when the customer selects an item code search option, two options are presented to the customer side by side. A first option is the selectable item code option, and a second option is the item code search option again. Alternatively, when the item code search option is selected, a search screen is presented to the customer along with the selectable item code option within the search screen.

In an embodiment of 221 and 230, at 231, the item code predictor causes the transaction interface to present the additional predicted item codes as additional and individual selectable item codes for the current non-barcoded item. So, more than one predicted item code is presented to the customer for selection for the customer's current non-barcoded item.

In an embodiment of 231 and at 232, the item code predictor causes the transaction interface 123-1 to present images and item descriptions for the predicted item code and the additional predicted item codes along with the selectable item code and the additional selectable item codes. The images allow the customer to readily discern if the customer's current non-barcoded item is either the selectable item code or one of the additional selectable item codes.

In an embodiment, at 240, the item code predictor receives an actual item code selected by the customer for the current non-barcoded item as feedback. The feedback for the actual item code is used to improve accuracy metrics associated with the predicted item codes of the list.

In an embodiment, at 250, the item code predictor periodically updates the list at a configured interval of time based on an updated transaction history for the customer. Thus, the list is continuously updated as transaction habits of the customer change or become more apparent based on subsequent transaction of the customer.

In an embodiment, at 260, the item code predictor sorts the list based on an updated probability assigned to each of the predicted item codes after the current transaction concludes. For example, the customer may have selected one of the additional predicted item codes at 232 instead of the initial predicted item code. Consequently, the probabilities assigned to the predicted item codes are updated following what is actually known for the current transaction of the customer.

FIG. 3 is a flow diagram of another method 300 for predicting non-barcoded items during checkouts, according to an example embodiment. The software module(s) that implements the method 300 is referred to as a "non-barcoded item code predictor." The non-barcoded item code predictor is implemented as executable instructions programmed and residing within memory and/or a non-transitory computer-readable (processor-readable) storage medium and executed by one or more processors of one or more devices. The processor(s) of the device(s) that executes the non-barcoded item code predictor are specifically configured and programmed to process the non-barcoded item code predictor. The non-barcoded item code predictor has access to one or more network connections during its processing. The connections can be wired, wireless, or a combination of wired and wireless.

In an embodiment, the device that executes the non-barcoded item code predictor is cloud 110 or server 110. In an embodiment, server 110 is a server of a given retailer that manages multiple stores, each store having a plurality of terminals 120. In an embodiment, multiple devices execute the non-barcoded item code predictor including cloud 110 and terminals 120. In an embodiment, a terminal 120 is a self-service terminal or a point-of-sale terminal. In an embodiment, the non-barcoded item code predictor is some, all, or any combination of, transaction system 113, loyalty system 114, non-barcoded item predictor 115, transaction manager 123, transaction interface 123-1, and/or method 200. In an embodiment, the non-barcoded item code predictor presents another, and in some ways, an enhanced processing perspective to that which was discussed above for operations of system 100 of FIG. 1 and for method 200 of FIG. 2.

At 310, non-barcoded item code predictor generates a data structure that identifies predicted item codes for non-barcoded items purchased by a customer. In an embodiment, the data structure is the table discussed above with system 100. In an embodiment, the data structure is a list as discussed above with method 200.

In an embodiment, at 311, the non-barcoded item code predictor calculates and derives metrics and patterns within the data structure for each predicted item code based on a transaction history of the customer. For example, the metrics can include frequencies of purchases by predicted item code and the patterns can include repeated purchases by day of week, month, or in combination with a barcoded item being purchased.

In an embodiment of 311 and at 312, the non-barcoded item code predictor adds image features for a model image of each item associated with a corresponding predicted item code into the data structure. Here, a camera 124 during a transaction can supply an image of the current non-barcoded item of a current transaction, images features are derived, and compared against known image features in the data structure to identify a particular predicted item code for the current non-barcoded item.

In an embodiment, at 313, the non-barcoded item code predictor maintains a current list of a configured number of the predicted item codes within the data structure. For example, the list can include 20 predicted item codes while the non-barcoded item code predictor maintains a list of the top 3 most likely predicted item codes for a next transaction of the customer.

At 320, the non-barcoded item code predictor integrates access to the data structure into a loyalty account of a loyalty system 114 of the customer. This can be done in a variety of manners.

In an embodiment of 313 and 320, at 321, the non-barcoded item code predictor updates the current list of the predicted item codes within a field or fields associated with the loyalty account. So, a record of the loyalty account within the loyalty system 114 includes an updated list of predicted item codes each time the loyalty account is accessed during a transaction of the customer.

In an embodiment, at 322, the non-barcoded item code predictor updates a link within a field of the loyalty account to reference or point to the data structure. In this embodiment, the data structure is stored separately from the loyalty system 114 and is accessed via a link in a field of the customer's loyalty account record.

In still another embodiment, at 323, the non-barcoded item code predictor provides an application programming interface (API) call to retrieve the data structure using a loyalty identifier for the loyalty account of the customer. Transaction system 113 and/or transaction manager 123 issues the API call to non-barcoded item code predictor during a transaction of the customer to retrieve the data structure or to retrieve a configurable number of the predicted item codes of the data structure.

At 330, the non-barcoded item code predictor provides access to the data structure through the loyalty account to enhance a transaction interface 123-1 of a terminal 120 during a current transaction of the customer. This is done by the transaction interface 123-1 presenting at least one of the predicted item codes as a selectable item code option to the customer for a current non-barcoded item. This is done in addition to an item code search option provided by the transaction interface 123-1 .

In an embodiment, at 340, the non-barcoded item code predictor updates the data structure at predetermined times to account for completed transactions of the customer where any of the non-barcoded items were purchased by the customer. Thus, the non-barcoded item code predictor maintains an up-to-date data structure of predicted item codes in advance of any next transaction by the customer which includes a non-barcoded item purchase.

The above description is illustrative, and not restrictive. Many other embodiments will be apparent to those of skill in the art upon reviewing the above description. The scope of embodiments should therefore be determined with reference to the appended claims, along with the full scope of equivalents to which such claims are entitled.

It should be appreciated that where software is described in a particular form (such as a component or module) this is merely to aid understanding and is not intended to limit how software that implements those functions may be architected or structured. For example, modules are illustrated as separate modules, but may be implemented as homogenous code, as individual components, some, but not all of these modules may be combined, or the functions may be implemented in software structured in any other convenient manner. Furthermore, although the software modules are illustrated as executing on one piece of hardware, the software may be distributed over multiple processors or in any other convenient manner.

The above description is illustrative, and not restrictive. Many other embodiments will be apparent to those of skill in the art upon reviewing the above description. The scope of embodiments should therefore be determined with reference to the appended claims, along with the full scope of equivalents to which such claims are entitled.

In the foregoing description of the embodiments, various features are grouped together in a single embodiment for the purpose of streamlining the disclosure. This method of disclosure is not to be interpreted as reflecting that the claimed embodiments have more features than are expressly recited in each claim. Rather, as the following claims reflect, inventive subject matter lies in less than all features of a single disclosed embodiment. Thus, the following claims are hereby incorporated into the Description of the Embodiments, with each claim standing on its own as a separate exemplary embodiment.

Throughout the description and claims of this specification, the words "comprise" and "contain" and variations of them mean "including but not limited to" and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of the features and/or steps are mutually exclusive. The invention is not restricted to any details of any foregoing embodiments. The invention extends to any novel one, or novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. A method, comprising:
maintaining a list of predicted item codes for non-barcoded items based on a transaction history of a customer;
providing a predicted item code obtained from the list during a current transaction of the customer at a terminal responsive to an indication that the customer is operating a transaction interface of the terminal to locate a potential item code for a current non-barcoded item; and
causing the transaction interface to present the predicted item code to the customer as a selectable item code for the current non-barcoded item before the customer performs an item code search within the transaction interface for the potential item code.

2. The method of claim 1 further comprising:
receiving an actual item code selected by the customer for the current non-barcoded item as feedback; and
using the actual item code to improve accuracy metrics associated with the predicted item codes of the list.

3. The method of claim 1 or claim 2 further comprising:
periodically updating the list of predicted item codes at a configured interval of time based on an updated transaction history for the customer.

4. The method of any one of the preceding claims further comprising:
sorting the list based on an updated probability assigned to each of the predicted item codes after the current transaction concludes; and/or
maintaining further includes linking the list to a loyalty account of the customer.

5. The method of any one of the preceding claims, wherein maintaining further includes sorting the list based on probabilities assigned to each of the predicted item codes.

6. The method of any one of the preceding claims, wherein maintaining further includes maintaining the list as a table, each row of the table identifies a certain predicted item code, and each column of the table identifies one or more of metric types, pattern types, and image feature types for a model image of a corresponding item.

7. The method of any one of the preceding claims, wherein providing further includes providing a configurable number of additional predicted item codes from the list with the predicted item code; and optionally
causing further includes causing the transaction interface to present the additional predicted item codes as additional selected item codes for the current non-barcoded item; and optionally
causing further includes causing the transaction interface to present images and item descriptions for the predicted item code and the additional predicted item codes along with the selectable item code and additional selectable item codes.

8. A method, comprising:
generating a data structure that identifies predicted item codes for non-barcoded items purchased by customer;
integrating access to the data structure into a loyalty account of a loyalty system of the customer; and
providing access to the data structure through the loyalty account to enhance a transaction interface of a terminal during a current transaction of the customer by presenting at least one of the predicted item codes as a selectable option to the customer for a current non-barcoded item in addition to an item code searching option provided by the transaction interface.

9. The method of claim 8 further comprising:
updating the data structure at predetermined times to account for completed transactions of the customer where any of the non-barcoded items were purchased.

10. The method of claim 8 or claim 9, wherein generating further includes calculating and deriving metrics and patterns within the data structure for each predicted item code based on a transaction history of the customer; and optionally
generating further includes adding image features for a model image of each item associated with a corresponding predicted item code into the data structure.

11. The method of any one of claims 8 to 10, wherein generating further includes maintaining a current list of a configured number of the predicted item codes with the data structure; and optionally
integrating further includes updating the current list into a field or fields associated with the loyalty account.

12. The method of any one of claims 8 to 11, wherein integrating further includes updating a link within a field of the loyalty account to the data structure.

13. The method of any one of claims 8 to 12, wherein integrating further includes providing an application programming interface call to retrieve the data structure using a loyalty identifier for the loyalty account.

14. A system, comprising:
at least one server comprising at least one processor and a non-transitory computer-readable storage medium;
the non-transitory computer-readable storage medium comprising executable instructions; and
the executable instructions when executed by at least one processor cause the at least one processor to perform operations, comprising:
maintaining a data structure comprising predicted item codes for non-barcoded item codes purchased by a customer based on a transaction history of the customer;
updating the data structure based on subsequent transactions of the customer;
providing access to at least a preconfigured number of the predicted item codes of the data structure using a loyalty identifier of the customer;
providing the at least preconfigured number of the predicted item codes to a transaction interface of a terminal based on receiving the loyalty identifier during a current transaction of the customer when the customer selects an item code lookup option for a current non-barcoded item; and
causing the transaction interface to present the at least preconfigured number of the predicted item codes as at least one selectable item code option for the current non-barcoded item without the customer conducting an item code search first through the item code lookup option.

15. The system of claim 14, wherein the terminal is a self-service terminal operated by a customer during the transaction or the terminal is a point-of-sale terminal operated by a cashier for the customer during the transaction.
